(19) Europäisches Patentamt
European Patent Office
Office européen des brevets

(11) EP 1 335 219 A1

(12) EUROPEAN PATENT APPLICATION
published in accordance with Art. 158(3) EPC

(43) Date of publication:
13.08.2003 Bulletin 2003/33

(51) Int Cl.7: G02B 6/10, G02B 6/16

(21) Application number: 01967755.8

(22) Date of filing: 20.09.2001

(86) International application number:
PCT/JP01/08193

(87) International publication number:
WO 02/025333 (28.03.2002 Gazette 2002/12)

(84) Designated Contracting States:
AT BE CH CY DE DK ES FI FR GB GR IE IT LI LU
MC NL PT SE TR
Designated Extension States:
AL LT LV MK RO SI

(30) Priority: 20.09.2000 JP 2000285552

(71) Applicant: Sumitomo Electric Industries, Ltd.
Osaka-shi, Osaka 541-0041 (JP)

(72) Inventors:
• SHIBATA, Toshikazu, c/o Yokohama Works
Yokohama-shi, Kanagawa 244-858 (JP)
• SUGANUMA, Hiroshi, c/o Yokohama Works
Yokohama-shi, Kanagawa 244-8588 (JP)
• INOUE, Akira, c/o Yokohama Works
Yokohama-shi, Kanagawa 244-8588 (JP)
• SHIOZAKI, Manabu, c/o Yokohama Works
Yokohama-shi, Kanagawa 244-8588 (JP)

(74) Representative: HOFFMANN EITLE
Patent- und Rechtsanwälte
Arabellastrasse 4
81925 München (DE)

(54) **OPTICAL WAVEGUIDE DIFFRACTION GRATING DEVICE, METHOD FOR FABRICATING OPTICAL WAVEGUIDE DIFFRACTION GRATING DEVICE, MULTIPLEXING/DEMULTIPLEXING MODULE, AND OPTICAL TRANSMISSION SYSTEM**

(57) A diffraction grating device according to the present invention is a diffraction grating device in which a diffraction grating based on perturbation of refractive index is formed through a predetermined range in a light guide direction in an optical waveguide and in which the diffraction grating selectively reflects light in a reflection band out of light guided through the optical waveguide. In the diffraction grating device, the reflection band is divided into K ($K \geq 2$) wavelength bands, and the perturbation of refractive index $\Delta n_{all}$ in the predetermined range is represented by the sum of index perturbations $\Delta n_k$ (k = 1-K) of periods $\Lambda_k$ according to the respective K wavelength bands. Furthermore, at least one set of phases out of phases $\varphi_k$ (k = 1-K) of the index perturbations $\Delta n_k$ at a center position of the predetermined range are different from each other. This permits provision of the diffraction grating device in a short total length, at low cost, and with excellent reflection and transmission characteristics.

**Fig.4A**

EP 1 335 219 A1

**Description**

**Technical Field**

The present invention relates to a diffraction grating device in which a diffraction grating based on perturbation of refractive index is formed through a predetermined range in a light guide direction in an optical waveguide, a method of producing it, a multiplexer/demultiplexer module incorporating the diffraction grating device and configured to multiplex or demultiplex light, and an optical transmission system incorporating the multiplexer/demultiplexer module and configured to perform optical transmission with multi-wavelength signal light.

**Background Art**

A diffraction grating device is a device in which a diffraction grating based on perturbation of refractive index is formed through a predetermined range in a light guide direction in an optical waveguide (e.g., an optical fiber), and is able to selectively reflect light within a predetermined reflection band out of light guided through the optical waveguide, by the diffraction grating. A multiplexer/demultiplexer module incorporating this diffraction grating device is able to multiplex' or demultiplex light by selectively reflecting light in the reflection band by the diffraction grating device and is used, for example, in WDM (Wavelength Division Multiplexing) transmission systems configured to perform optical transmission using wavelength-multiplexed signal light of multiple wavelengths.

In general, the diffraction grating device is provided with the diffraction grating based on the refractive index perturbation of a definite period $\Lambda$ through the predetermined range in the light guide direction in the optical waveguide and this diffraction grating selectively reflects light of wavelength $\lambda$ satisfying the Bragg condition represented by the equation of $\lambda = 2N \cdot \Lambda$, but transmits light of the other wavelengths. Here N is an average effective index of refraction in the index perturbation region of the optical waveguide.

When a diffraction grating device is constructed in a configuration wherein K diffraction gratings based on refractive index perturbations of mutually different periods $\Lambda_k$ are formed in mutually different regions along the light guide direction of an optical waveguide, it is able to selectively reflect lightwaves of respective K wavelengths $\lambda_k$ (= $2N \cdot \Lambda_k$) (k = 1-K, where $K \geq 2$). The diffraction grating device configured to selectively reflect the lightwaves of plural wavelengths is, however, longer in total length and higher in cost, because the plurality of diffraction gratings are formed in the respective, mutually different regions in the light guide direction of the optical waveguide.

In contrast to it, there are the known diffraction grating devices in which a diffraction grating based on perturbation of refractive index is formed through a predetermined range in the light guide direction in an optical waveguide and in which the diffraction grating selectively reflects lightwaves of plural wavelengths out of light guided in the optical waveguide. For example, Document 1 "M. Ibsen, et al., "Sine-Sampled Fiber Bragg Gratings for Identical Multiple Wavelength Operation," IEEE Photon. Technol. Lett., Vol. 10, No. 6, pp.842-844 (1998)" describes the diffraction grating device in which a profile of the index perturbation in the predetermined range is of a sinc function type. Document 2 "L. A. Everall, et al., "Fabrication of multipassband moire resonators in fibers by the dual-phase-mask exposure method," Opt. Lett., Vol. 22, No. 19, pp.1473-1475 (1997)" describes the diffraction grating device in which index perturbations of periods $\Lambda_k$ (k = 1-K) are superimposedly formed in the predetermined range.

**Disclosure of the Invention**

The Inventor et al. studied the above conventional technologies and found the following problem. Specifically, since the diffraction grating devices described in Documents 1 and 2 above have the diffraction grating based on the perturbation of refractive index, formed in only one region in the light guide direction in the optical waveguide, they are short in total length and low in cost. However, these diffraction grating devices still have significant transmittance at the wavelengths $\lambda_k$ to be reflected, and thus transmit part of the lightwaves of the wavelengths $\lambda_k$ to be reflected (k = 1-K). In addition, there exist wavelengths where the reflectance becomes peak, outside the reflection band, and the reflectance is high at the wavelengths; thus, part of the light of the wavelengths to be transmitted is reflected.

Therefore, when a multiplexer/demultiplexer module incorporating such a diffraction grating device is applied to a WDM transmission system, crosstalk can occur between the light of the wavelengths that is to be transmitted and that has actually been transmitted by the diffraction grating device and the light of the wavelengths that is to be reflected but that has been transmitted by the diffraction grating device, in the case of the difference between the wavelengths being small, so as to increase the reception error rate. Since the diffraction grating device transmits part of the light of the wavelengths to be reflected, there are power losses in the light of the wavelengths that is to be reflected and that has actually been reflected by the diffraction grating device. Likewise, since the diffraction grating device reflects part of the light of the wavelengths to be transmitted, there are also power losses in the light of the wavelengths that is to be transmitted and that has actually been transmitted by the diffraction grating device.

The present invention has been accomplished to solve the above problem and an object of the present invention is to provide a diffraction grating device short in total length, low in cost, and excellent in the reflection and transmission characteristics, and a method of producing the diffraction grating device. Another object of the present invention is to provide a multiplexer/demultiplexer module incorporating the diffraction grating device, and an optical transmission system incorporating the multiplexer/demultiplexer module.

A diffraction grating device according to the present invention is a diffraction grating device in which a diffraction grating based on perturbation of refractive index is formed through a predetermined range in a light guide direction in an optical waveguide and in which the diffraction grating selectively reflects light in a reflection band out of light guided through the optical waveguide. The reflection band is divided into K ($K \geq 2$) wavelength bands and the perturbation of refractive index $\Delta n_{all}$ in the predetermined range is represented by the sum of index perturbations $\Delta n_k$ (k = 1-K) of periods $\Lambda_k$ according to the respective K wavelength bands. Furthermore, at least one set of phases out of phases $\varphi_k$ (k = 1-K) of the index perturbations $\Delta n_k$ at a center position of the predetermined range are different from each other.

This diffraction grating device is able to lower the maximum reflectance outside the reflection band in a state in which the minimum transmittance is set low in the reflection band. Since the diffraction grating based on the perturbation of refractive index is formed in only one region in the light guide direction in the optical waveguide, the element can be constructed in a shorter total length and at lower cost.

In the diffraction grating device according to the present invention, a standard deviation of a displacement amount $\Delta z_k = \Lambda_k \cdot \Delta\varphi_k/360$ (k = 1-K), which is expressed using a phase shift amount $\Delta\varphi_k$ (k = 1-K) between a reference phase $\varphi_0$ and the phase $\varphi_k$ at the center position of the predetermined range of each of the index perturbations $\Delta n_k$ (k = 1-K), is preferably not less than 30 nm, more preferably not less than 50 nm, and still more preferably not less than 100 nm. The standard deviation of not less than 30 nm is suitable for controlling the maximum reflectance outside the reflection band at or below -20 dB in the case of four-wave reflection. The standard deviation of not less than 50 nm is suitable for controlling the maximum reflectance outside the reflection band at or below -30 dB in the case of four-wave reflection and for controlling the maximum reflectance outside the reflection band at or below -20 dB in the case of eight-wave reflection. The standard deviation of not less than 100 nm is suitable for controlling the maximum reflectance outside the reflection band at or below -30 dB in the case of eight-wave reflection.

In the diffraction grating device according to the present invention, a maximum amplitude of the perturbation $\Delta n_{all}$ of the diffraction grating in the predetermined range is preferably not more than two thirds of that on the assumption that all the phases $\varphi_k$ are equal. This configuration is suitable for controlling the maximum reflectance outside the reflection band at or below -20 dB in a state in which the minimum transmittance in the reflection band is set at or below -20 dB.

In the diffraction grating device according to the present invention, preferably, a minimum transmittance in each of the K wavelength bands is not more than -20 dB (preferably, not more than -30 dB), and a maximum reflectance outside the reflection band is not more than -20 dB (preferably, not more than -30 dB). This diffraction grating device demonstrates the smaller minimum transmittance inside the reflection band, the smaller maximum reflectance outside the reflection band, and the superior reflection and transmission characteristics, as compared with the conventional diffraction grating devices.

A production method of a diffraction grating device according to the present invention is a method of producing the above-stated diffraction grating device according to the present invention, wherein the phases $\varphi_k$ (k = 1-K) are designed by nonlinear programming and the diffraction grating device is produced based thereon. This production method of the diffraction grating device permits easy production of the diffraction grating device with excellent reflection and transmission characteristics.

A multiplexer/demultiplexer module according to the present invention comprises the above-stated diffraction grating device according to the present invention, wherein the diffraction grating device selectively reflects light in the reflection band, thereby effecting multiplexing or demultiplexing of light. An optical transmission system according to the present invention is an optical transmission system for performing optical transmission using wavelength-multiplexed signal light of multiple wavelengths, which comprises the above-stated multiplexer/demultiplexer module according to the present invention, wherein the multiplexer/demultiplexer module multiplexes or demultiplexes the signal light of the multiple wavelengths. In this configuration, the crosstalk is little even in the case of the difference being small between reflected wavelengths and transmitted wavelengths, the reception error rate is low, and the power losses are kept small in the light of the reflected wavelengths.

For the module performing only either one of multiplexing and demultiplexing, a preferred configuration is such that the minimum transmittance in each of the K wavelength bands is not more than -20 dB and the maximum reflectance outside the reflection band is not more than -20 dB. For the module performing both multiplexing and demultiplexing, a preferred configuration is such that the minimum transmittance in each of the K wavelength bands is not more than -30 dB and the maximum reflectance outside the reflection band is not more than -30 dB.

The present invention can be further fully understood from the detailed description and the accompanying drawings which will follow. It should be noted that these are presented merely for the illustrative purpose, but are not to be understood in the way to limit the present invention.

**Brief Description of the Drawings**

Fig. 1 is a schematic diagram of a diffraction grating device according to the present embodiment.

Fig. 2 is a graph showing the relationship between the standard deviation of displacement amount and the maximum reflectance outside the reflection band in the case of four-wave reflection.

Fig. 3 is a graph showing the relationship between the standard deviation of displacement amount and the maximum reflectance outside the reflection band in the case of eight-wave reflection.

Figs. 4A and 4B are graphs showing the reflectance characteristics and the transmittance characteristics, respectively, of the diffraction grating device according to the present embodiment.

Fig. 5 is a diagram to illustrate a method of producing the diffraction grating device according to the present embodiment.

Fig. 6 is a graph showing the reflectance characteristics of the diffraction grating device in Example 1.

Fig. 7 is a graph showing the reflectance characteristics of the diffraction grating device in Example 2.

Fig. 8 is a graph showing the reflectance characteristics of the diffraction grating device in Comparative Example.

Fig. 9 is a graph showing the relationship between the maximum out of maximum values of reflectance outside the reflection band and the maximum out of minimum values of transmittance in the reflection band.

Fig. 10 is a graph showing the relationship between the maximum amplitude of the index perturbation $\Delta n_{all}$ of the diffraction grating and the maximum out of maximum values of reflectance outside the reflection band.

Fig. 11 is a schematic diagram of a multiplexer/demultiplexer module according to the first embodiment.

Fig. 12 is a schematic diagram of a multiplexer/demultiplexer module according to the second embodiment.

Fig. 13 is a schematic diagram of a multiplexer/demultiplexer module according to the third embodiment.

Fig. 14 is a schematic block diagram of an optical transmission system according to the present embodiment.

**Best Mode for Carrying out the Invention**

Embodiments of the present invention will be described below in detail with reference to the accompanying drawings. In the description of the drawings the same elements will be denoted by the same reference symbols and redundant description will be omitted.

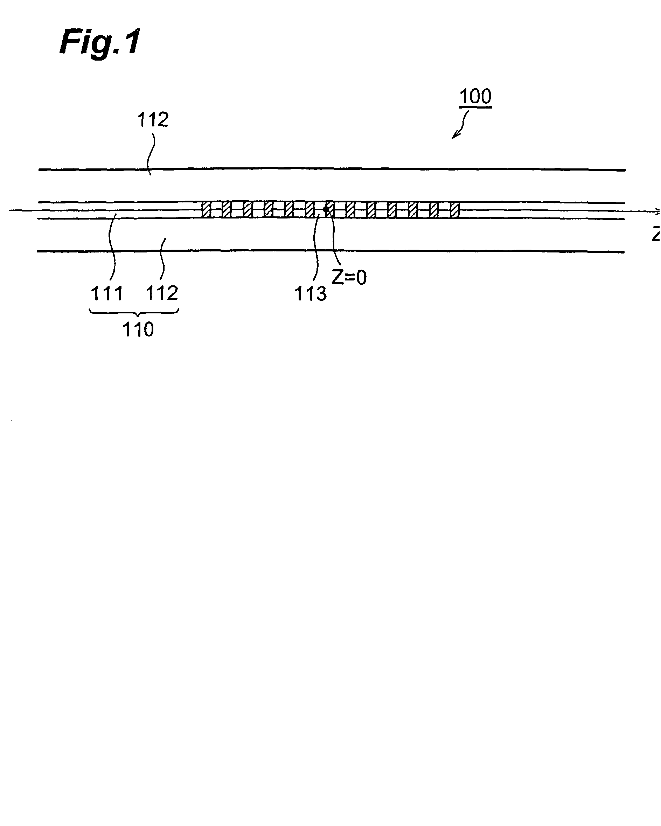

First, embodiments of the diffraction grating device and the production method thereof according to the present invention will be described. Fig. 1 is a schematic diagram of diffraction grating device 100 according to the present embodiment. This figure shows a sectional view of the diffraction grating device 100 cut by a plane including the optical axis. This diffraction grating device 100 is a device in which a diffraction grating 113 is formed in an optical fiber 110 as an optical waveguide. The optical fiber 110 contains silica glass as a principal component, a core region 111 including the center of the optical axis contains an additional component of $GeO_2$, and a cladding region 112 is provided around the core region 111. The diffraction grating 113 based on perturbation of refractive index $\Delta n_{all}$ is formed through a predetermined range in the light guide direction in the optical fiber 110.

When the z-axis is taken along the light guide direction with the origin at the center position of the predetermined range where the diffraction grating 113 is formed, the perturbation of refractive index $\Delta n_{all}(z)$ of this diffraction grating 113 is expressed by the equation below.

$$\Delta n_{all}(z) = \sum_{k=1}^{K} \Delta n_k(z) \qquad (1a)$$

$$\Delta n_k(z) = \Delta n(z)\cos(\frac{2\pi}{\Lambda_k}z + \phi_k) \qquad (1b)$$

$$\Delta n(z) = a \exp\left(-\left|\frac{z}{b}\right|^\alpha\right) \qquad\qquad (1c)$$

Here K is an integer not less than 2, and the index perturbation $\Delta n_{all}$ of the diffraction grating 113 is represented by the sum of index perturbations $\Delta n_k$ (k = 1-K) of definite periods $\Lambda_k$. $\Lambda_k$ represents the period of the index perturbation according to each wavelength $\lambda_k$ to be reflected. $\varphi_k$ indicates the phase at the origin (z = 0) of the kth index perturbation $\Delta n_k$. $\Delta n(z)$ represents the amplitude of each index perturbation $\Delta n_k$ and is represented by a super Gaussian function of a parameter z.

In the diffraction grating device 100 according to the present embodiment, at least one set of phases out of the phases $\varphi_k$ (k = 1-K) of the index perturbations $\Delta n_k$ are intentionally set at different values and thus are different from each other. This makes it feasible to decrease the maximum reflectance outside the reflection band in a state in which the minimum transmittance in the reflection band is set small. Namely, the conventional diffraction grating devices encountered the problem that decrease in the minimum transmittance in the reflection band resulted in increase in the maximum reflectance outside the reflection band, while decrease in the maximum reflectance outside the reflection band resulted in increase in the minimum transmittance in the reflection band. In contrast to it, in the diffraction grating device 100 according to the present embodiment, the adjustment of both the amplitude and phase of each index perturbation has permitted decreasing both the maximum reflectance outside the reflection band and the minimum transmittance in the reflection band.

Here a phase shift amount $\Delta\varphi_k$ (k = 1-K) between the phase $\varphi_k$ at the origin (z = 0) of each index perturbation $\Delta n_k$ and a reference phase $\varphi_0$ ($\varphi_0$ is an arbitrary value) is represented by the following equation.

$$\Delta\varphi_k = \varphi_k - \varphi_0 \qquad\qquad (2)$$

There is a correlation between the phase shift amount $\Delta\varphi_k$ (k = 1-K) and a displacement amount $\Delta z_k$ of each index perturbation $\Delta n_k$ (k = 1-K), and the displacement amount $\Delta z_k$ is represented by the following equation.

$$\Delta z_k = \Lambda_k \times \Delta\varphi_k/360 \qquad\qquad (3)$$

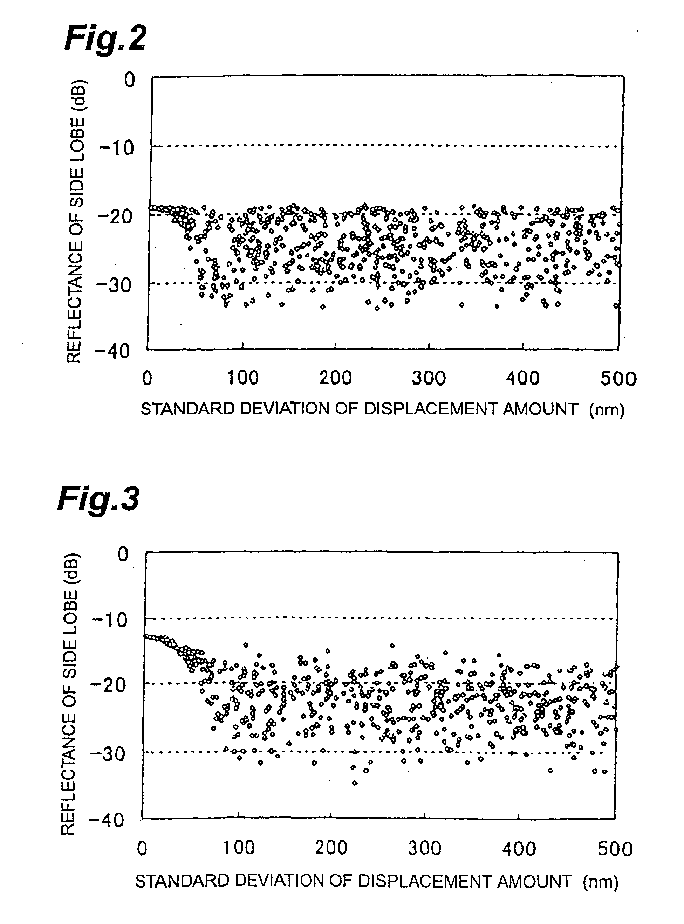

Fig. 2 and Fig. 3 are graphs showing plots of the results of a thousand calculations to calculate the peak value of the maximum reflectance outside the reflection band, for the diffraction grating devices wherein the displacement amount $\Delta z_k$ (k = 1-K) at the origin (z = 0) of each index perturbation $\Delta n_k$ is set at random, in the respective cases of four-wave reflection and eight-wave reflection. In Figs. 2 and 3, the horizontal axis indicates the standard deviation of the displacement amount $\Delta z_k$ and the vertical axis the peak value of the maximum reflectance outside the reflection band.

As shown in Fig. 2, it is seen in the case of four-wave reflection that the standard deviation of the displacement amount $\Delta z_k$ needs to be not less than 30 nm in order to control the peak value of the maximum reflectance outside the reflection band at or below -20 dB and that the standard deviation of the displacement amount $\Delta z_k$ needs to be not less than 30 nm in order to control it at or below -30 dB. As shown in Fig. 3, it is also seen in the case of eight-wave reflection that the standard deviation of the displacement amount $\Delta z_k$ needs to be not less than 50 nm in order to control the peak value of the maximum reflectance outside the reflection band at or below -20 dB and that the standard deviation of the displacement amount $\Delta z_k$ needs to be not less than 100 nm in order to control it at or below -30 dB.

According to this finding, in the diffraction grating device 100 of the present embodiment, the standard deviation of the displacement amount $\Delta z_k$ (k = 1-K) is preferably not less than 30 nm, more preferably not less than 50 nm, and still more preferably not less than 100 nm. The standard deviation of not less than 30 nm is suitable for controlling the maximum reflectance outside the reflection band at or below -20 dB in the case of four-wave reflection. The standard deviation of not less than 50 nm is suitable for controlling the maximum reflectance outside the reflection band at or below -30 dB in the case of four-wave reflection and for controlling the maximum reflectance outside the reflection band at or below -20 dB in the case of eight-wave reflection. The standard deviation of not less than 100 nm is suitable for controlling the maximum reflectance outside the reflection band at or below -30 dB in the case of eight-wave reflection.

Alternatively, in the diffraction grating device 100 according to the present embodiment, it is preferable that the maximum amplitude of the index perturbation $\Delta n_{all}$ of the diffraction grating 113 be not more than two thirds of that on the assumption that all the phases $\varphi_k$ (k = 1-K) are equal. This configuration is suitable for controlling the maximum reflectance outside the reflection band at or below -20 dB in a state in which the minimum transmittance in the reflection band is set at or below -20 dB.

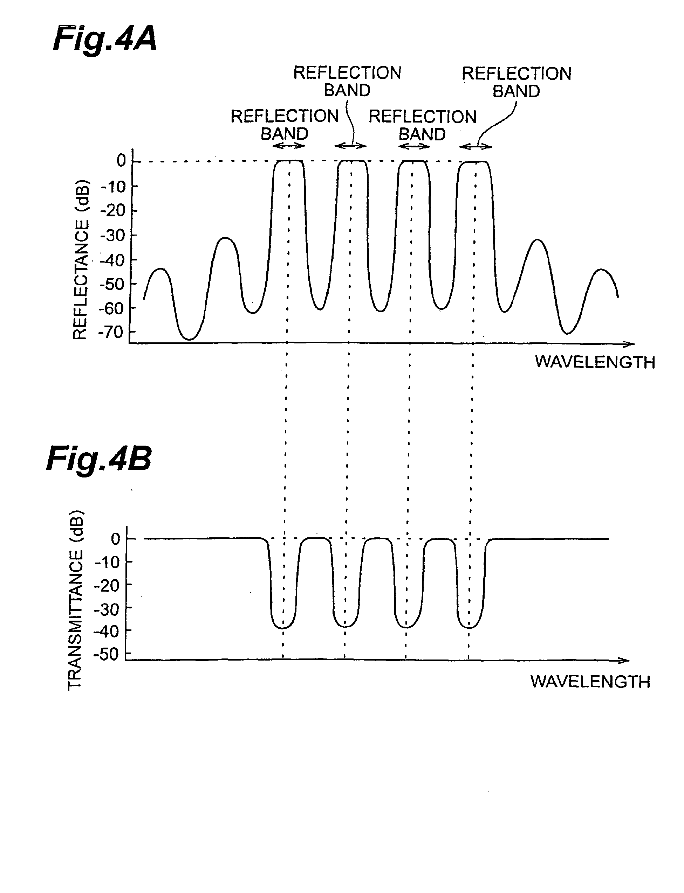

Figs. 4A and 4B are graphs showing an example of the reflectance characteristics and transmittance characteristics, respectively, of the diffraction grating device 100 according to the present embodiment. In this example, K = 4. The reflection band is divided into four wavelength bands including respective reflection wavelengths $\lambda_1$-$\lambda_4$. The minimum transmittance in each of the four wavelength bands is not more than -20 dB (more preferably, not more than -30 dB). The maximum reflectance outside the reflection band is not more than -20 dB (more preferably, not more than -30 dB).

In the diffraction grating device 100 as described, when light of multiple wavelengths arrives at the diffraction grating 113 through the core region of the optical fiber 110, the diffraction grating 113 reflects light in the reflection band including the wavelengths $\lambda k$ (= $2N \cdot \Lambda_k$) satisfying the Bragg condition in any one of the index perturbations $\Delta n_k$ (k = 1-K) of the definite periods $\Lambda_k$, out of the arriving light, while the diffraction grating 113 transmits the other light outside the reflection band. Since the phase $\varphi_k$ of each index perturbation $\Delta n_k$ has the aforementioned relation, the diffraction grating device 100 has the smaller minimum reflectance in the reflection band, the smaller maximum reflectance outside the reflection band, and the superior reflection and transmission characteristics, as compared with the conventional elements. This diffraction grating device 100 is constructed in the short total length and at low cost, because the diffraction grating 113 based on the index perturbation $\Delta n_{all}$ is formed in only one range in the light guide direction in the optical fiber 110.

Next, a production method of the diffraction grating device 100 according to the present embodiment will be described.

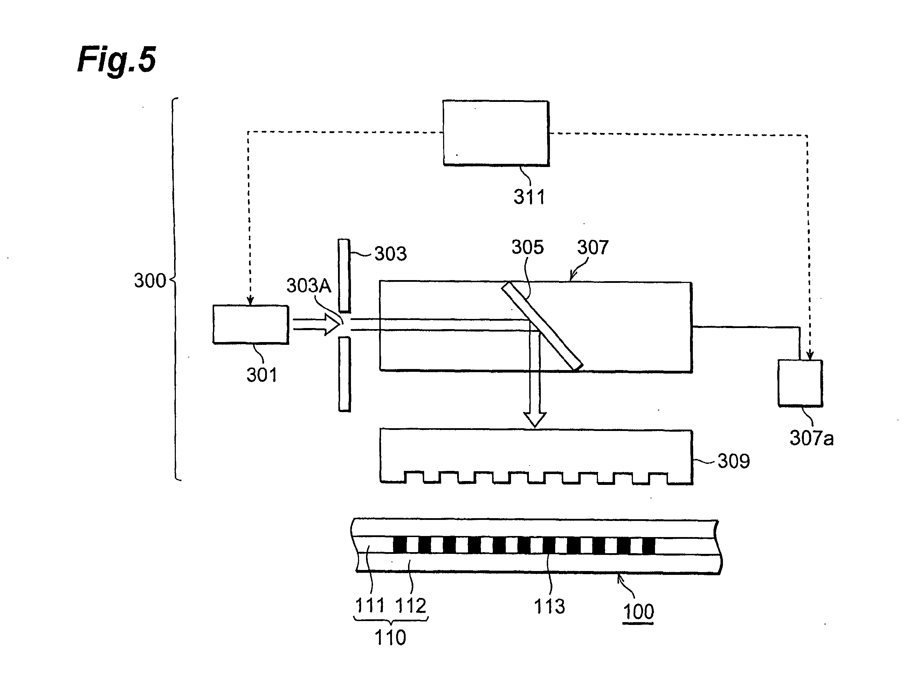

A production system 300 as shown in Fig. 5 is used for production of the diffraction grating device 100. This system 300 is equipped with a laser source 301, a slit 303, a mirror 305, a stage 307 provided with a driving motor 307a, a phase grating 309, and a control unit 311.

The laser source 301 emits light to induce the perturbation of refractive index in the core region 111 of the optical fiber 110. An excimer laser source to emit ultraviolet laser light (e.g., a KrF excimer laser source or the like) can be suitably applied as the light source 301. This laser source 301 is tunable in intensity of output light.

The slit 303 allows light impinging on an aperture 303A out of the light emitted from the laser source 301 to pass through the aperture 303A and fall on the mirror 305. The mirror 305 reflects the light having passed through the aperture 303A of the slit 303, to make it incident on the phase grating 309. This mirror 305 is arranged to be movable in the longitudinal direction of the optical fiber 110 by the stage 307 having the driving motor 307a. By moving the mirror 305 in this way, it is feasible to scan in the longitudinal direction of the optical fiber 110 with the light emitted from the laser source 301 to the phase grating 309 and make the light incident into the optical fiber.

The phase grating 309 has projections and depressions of a definite period in a side opposite to the incidence side of the light reflected by the mirror 305 (i.e., in the side where the optical fiber is placed), and diffracts the incident light. Then the phase grating 309 forms interference fringes between +1st-order diffracted light and -1st-order diffracted light and thus forms a perturbation of refractive index according to the interference fringes in the optical waveguide region of the optical fiber 110. The optical fiber 110 with the index perturbation thus formed in the optical waveguide region is the diffraction grating device 100.

The control unit 311 is comprised of a CPU, a memory storing control programs, and so on. This control unit 311 is electrically coupled to the laser source 301 and controls the intensity of the light emitted from the laser source 301. The control unit 311 is also electrically coupled to the driving motor 307a of the stage 307 and controls the position of the mirror 305.

In the production of the diffraction grating device 100 using the above-stated system 300, the optical fiber 110 in which the diffraction grating 113 is to be formed, is first placed immediately below the phase grating 309. The optical fiber 110 has the core region 111 in the central area, and the cladding region 112 surrounding the core region 111. Light guided through the optical fiber 110 propagates as confined in the core region 111, and part of energy of the light also exists in the cladding region 112 in the vicinity of the core region 111. Namely, the optical waveguide region of the optical fiber 110 includes the core region 111 and the cladding region 112 in the vicinity of the core region 111. The optical fiber 110 is made of silica glass as a principal component and the optical waveguide region (at least the core region) contains an additional component of $GeO_2$.

This optical fiber 110 is next exposed, for example, to the ultraviolet laser light of the wavelength of 248 nm outputted from the KrF excimer laser source 301, through the phase mask 309 having the projections and depressions of the predetermined period. Then the refractive index is modulated in the $GeO_2$-doped region according to irradiation intensities, thereby forming the index perturbation $\Delta n_1$ of the predetermined period $\Lambda_1$.

While successively replacing the phase mask 309 with another, the ultraviolet laser irradiation as described is repeatedly carried out, thereby forming the index perturbations $\Delta n_k$ of the definite periods $\Lambda_k$ in superimposed manner (k = 1-K). The location of the phase mask 309 is determined in each of K ultraviolet laser irradiations so that each

phase $\varphi_k$ (k =1-K) has the aforementioned relation. More specifically, each phase mask 309 is located based on the displacement amount $\Delta z_k$ (k = 1-K) determined from Eq (3) above, using each phase $\varphi_k$ (k = 1-K). Here each phase $\varphi_k$ (k = 1-K) is preferably designed by nonlinear programming. The nonlinear programming is based, for example, on Simulated Annealing or the genetic algorithms. This permits easy production of the above-stated diffraction grating device with excellent reflection and transmission characteristics.

Specific examples of the diffraction grating device according to the present embodiment will be described below together with a comparative example. In the examples, K was set to 8 and the reflected wavelengths $\lambda_1$-$\lambda_8$ were set at intervals of 0.8 nm from 1547.2 nm to 1552.8 nm. The parameter a appearing in the function of the amplitude $\Delta n(z)$ of each index perturbation $\Delta n_k$ was $2.5 \times 10^{-4}$ and the parameter b 4 mm. The length of the predetermined range where the diffraction grating was formed, was 20 mm. Then the phases $\varphi_1$-$\varphi_8$ in each of Example 1, Example 2, and Comparative Example were set at the values presented in the table below. In each of Example 1 and Example 2, the phases $\varphi_1$-$\varphi_8$ were those designed by nonlinear programming. The standard deviation of the displacement amount $\Delta z_k$ (k = 1-K) represented by Eq (3) above was 104 nm in Example 1, and 141 nm in Example 2. In Comparative Example all the phases $\varphi_1$-$\varphi_8$ were zero.

TABLE 1

| Channnel | Reflected wavelength (nm) | Phase(degree) | | |
|---|---|---|---|---|
| | | Example 1 | Example 2 | Comparative Example |
| 1 | 1547.2 | -125 | 145 | 0 |
| 2 | 1548.0 | -50 | 25 | 0 |
| 3 | 1548.8 | -160 | 105 | 0 |
| 4 | 1549.6 | 5 | 60 | 0 |
| 5 | 1550.4 | 45 | 105 | 0 |
| 6 | 1551.2 | 35 | -120 | 0 |
| 7 | 1552.0 | -95 | -110 | 0 |
| 8 | 1552.8 | -35 | 100 | 0 |

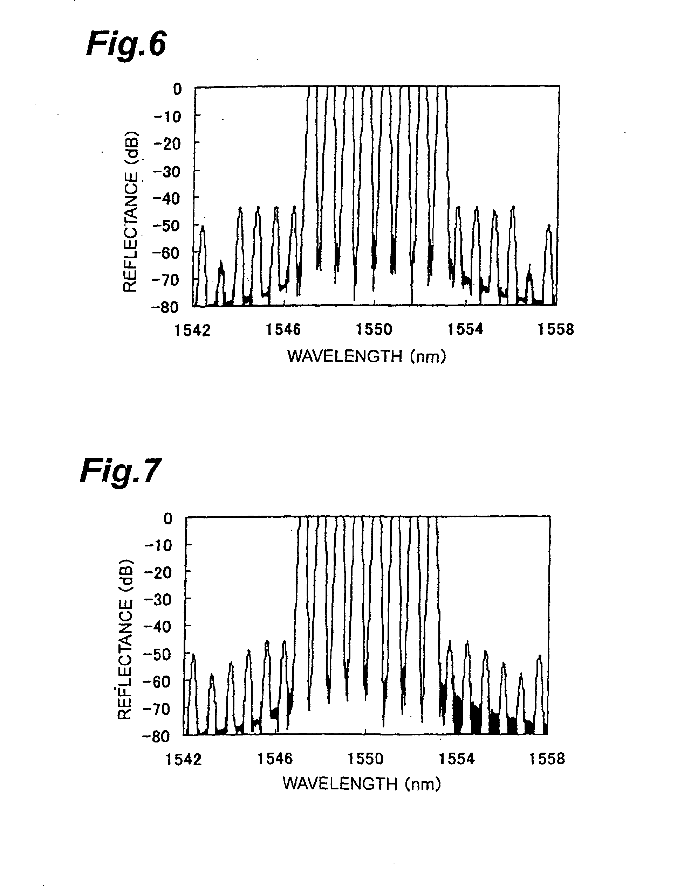

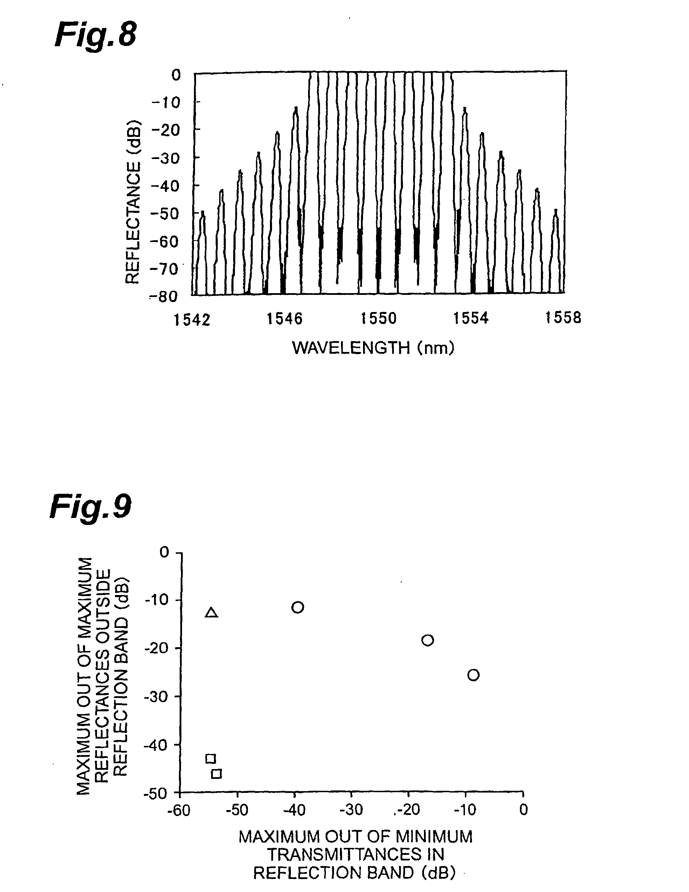

Fig. 6 is a graph showing the reflectance characteristics of the diffraction grating device in Example 1. Fig. 7 is a graph showing the reflectance characteristics of the diffraction grating device in Example 2. Fig. 8 is a graph showing the reflectance characteristics of the diffraction grating device in Comparative Example. As apparent from these graphs, the maximum is approximately -12 dB out of maximum reflectances outside the reflection band in Comparative Example, whereas the maximum is not more than -40 dB out of maximum reflectances outside the reflection band in each of Example 1 and Example 2. The maximum out of minimum transmittances in the reflection band is approximately -55 dB in Comparative Example, whereas the maximum out of minimum transmittances in the reflection band is also approximately -55 dB in each of Example 1 and Example 2.

Fig. 9 is a graph showing the relationship between the maximum out of maximum reflectances outside the reflection band and the maximum out of the minimum transmittances in the reflection band. In this figure, marks □ indicate the respective cases of Example 1 and Example 2, mark △ the case of above Comparative Example, and marks o cases of other comparative examples (cases in Document 1 cited in the section of (Background Art). As apparent from this graph, the maximum reflectance outside the reflection band is smaller in the cases of Example 1 and Example 2 (marks □) than in the cases of the comparative examples (marks △ and o).

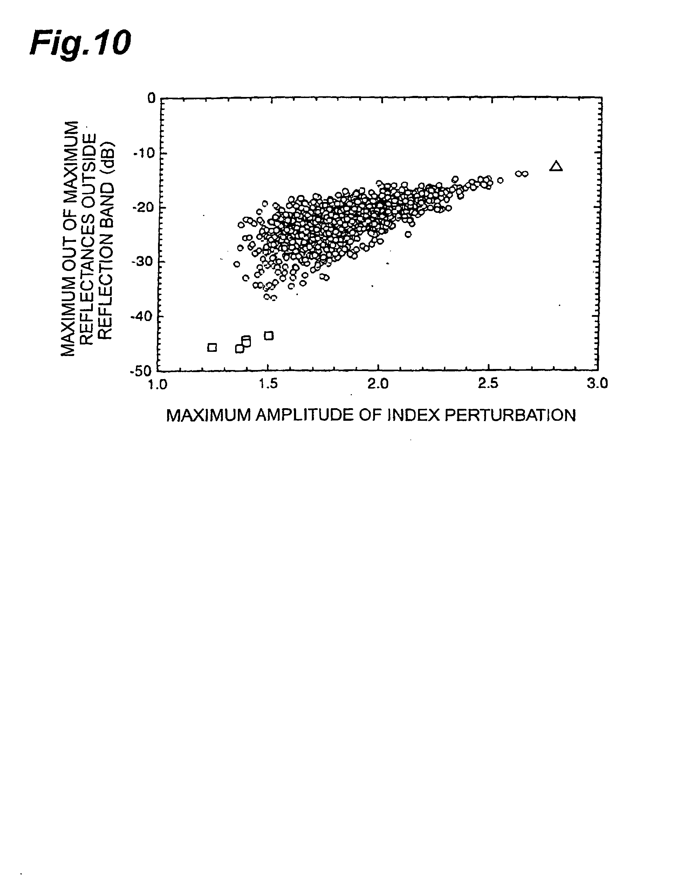

Fig. 10 is a graph showing the relationship between the maximum amplitude of the index perturbation $\Delta n_{all}$ of the diffraction grating and the maximum out of the maximum reflectances outside the reflection band. In this figure, marks □ indicate the cases of Examples in which each phase $\varphi_k$ was designed by nonlinear programming, marks o cases of comparative examples in which each phase $\varphi_k$ was set at random (in a thousand ways), and mark △ the case of Comparative Example where all the phases $\varphi_k$ were zero. As apparent from this graph, the maximum reflectance outside the reflection band is smaller in the examples (marks o) where each phase $\varphi_k$ was set at random, and is much smaller in Examples (marks □) in which each phase $\varphi_k$ was designed by nonlinear programming, than that in the case of Comparative Example (mark △) in which all the phases $\varphi_k$ were set zero. The maximum amplitude of the index perturbation $\Delta n_{all}$ of the diffraction grating in each Example where each phase $\varphi_k$ was designed by nonlinear programming (marks □), is not more than two thirds of that in Comparative Example (mark △) in which all the phases $\varphi_k$ were zero.

Embodiments of the multiplexer/demultiplexer module according to the present invention will be described.

The multiplexer/demultiplexer module in each of the embodiments described below incorporates the diffraction grating device 100 according to the above embodiment. The following description will be given on the assumption that the diffraction grating device 100 reflects light of wavelengths $\lambda_{2m}$ but transmits light of wavelengths $\lambda_{2m+1}$. It is also assumed herein that m is an integer between 1 and M both inclusive and the wavelengths satisfy the following relation:

$$\lambda_1 < \lambda_2 < \lambda_3 <...< \lambda_{2M-1} < \lambda_{2M} \qquad (4)$$

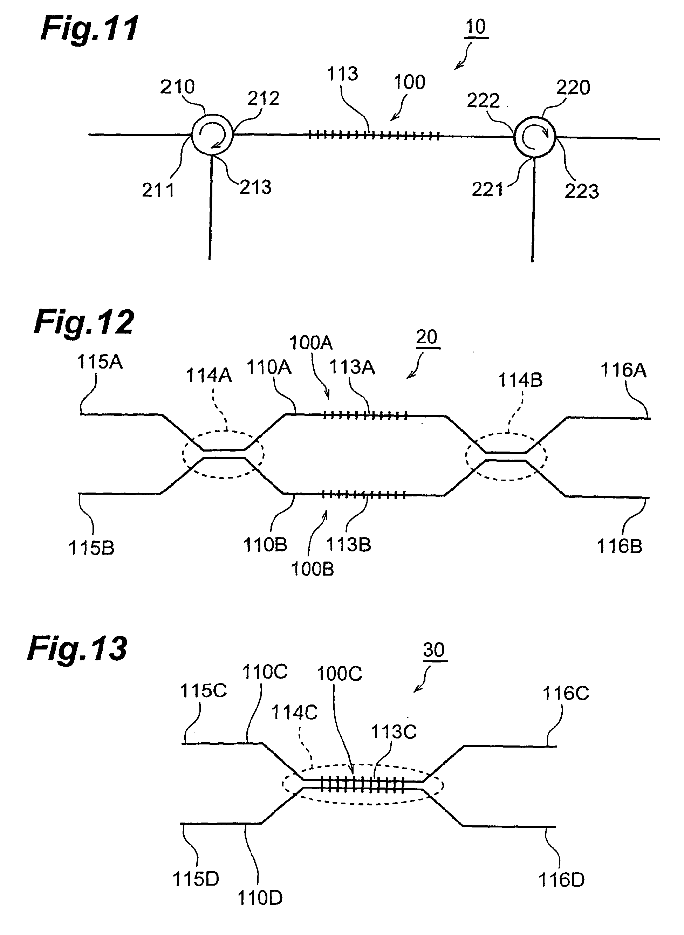

Fig. 11 is a schematic diagram of the multiplexer/demultiplexer module 10 according to the first embodiment. This multiplexer/demultiplexer module 10 is constructed in a configuration wherein an optical circulator 210 is coupled to one end of the diffraction grating device 100 and another optical circulator 220 is coupled to the other end of the diffraction grating device 100. The optical circulator 210 has a first port 211, a second port 212, and a third port 213 and is configured to output light entering the first port 211, from the second port 212 into the diffraction grating device 100 and output light entering the second port 212, from the third port 213. The optical circulator 220 has a first port 221, a second port 222, and a third port 223 and is configured to output light entering the first port 221, from the second port 222 into the diffraction grating device 100 and output light entering the second port 222, from the third port 223.

In the multiplexer/demultiplexer module 10, when the light of the wavelengths $\lambda_{2m+1}$ enters the first port 211 of the optical circulator 210, the light of these wavelengths is outputted from the second port 212 of the optical circulator 210 into the diffraction grating device 100, travels through the diffraction grating device 100, enters the second port 222 of the optical circulator 220, and is then outputted from the third port 223 of the optical circulator 220. When the light of the wavelengths $\lambda_{2m}$ enters the first port 221 of the optical circulator 220, the light of these wavelengths is outputted from the second port 222 of the optical circulator 220 into the diffraction grating device 100, is reflected by the diffraction grating device 100, enters the second port 222 of the optical circulator 220, and is outputted from the third port 223 of the optical circulator 220. Namely, the multiplexer/demultiplexer module 10 acts as a multiplexer in this case to multiplex the light of the wavelengths $\lambda_{2m+1}$ entering the first port 211 of the optical circulator 210, with the light of the wavelengths $\lambda_{2m}$ entering the first port 221 of the optical circulator 220 and output the multiplexed light of the wavelengths $\lambda_1$-$\lambda_{2M}$ from the third port 223 of the optical circulator 220. If the multiplexer/demultiplexer module 10 is used only as a multiplexer, the module does not have to be equipped with the optical circulator 210.

When the light of the wavelengths $\lambda_1$-$\lambda_{2M}$ enters the first port 211 of the optical circulator 210 in the multiplexer/demultiplexer module 10, the light of these wavelengths is outputted from the second port 212 of the optical circulator 210 into the diffraction grating device 100. Then the light of the wavelengths $\lambda_{2m}$ out of these lightwaves is reflected by the diffraction grating device 100, enters the second port 212 of the optical circulator 210, and is outputted from the third port 213 of the optical circulator 210. On the other hand, the light of the wavelengths $\lambda_{2m+1}$ travels through the diffraction grating device 100, enters the second port 222 of the optical circulator 220, and is then outputted from the third port 223 of the optical circulator 220. Namely, the multiplexer/demultiplexer module 10 acts as a demultiplexer in this case to demultiplex the light of the wavelengths $\lambda_1$-$\lambda_{2M}$ entering the first port 211 of the optical circulator 210, output the light of the wavelengths $\lambda_{2m}$ from the third port 213 of the optical circulator 210, and output the light of the wavelengths $\lambda_{2m+1}$ from the third port 223 of the optical circulator 220. When the multiplexer/demultiplexer module 10 is used only as a demultiplexer, the module does not have to be equipped with the optical circulator 220.

Furthermore, this multiplexer/demultiplexer module 10 also acts as an optical ADM (Add-Drop Multiplexer), while acting as a multiplexer and as a demultiplexer. Specifically, the multiplexer/demultiplexer module 10 outputs the light of the wavelengths $\lambda_{2m}$ out of the wavelengths $\lambda_1$-$\lambda_{2M}$ entering the first port 211 of the optical circulator 210, from the third port 213 of the optical circulator 210 (Drop) and inputs the light of the wavelengths $\lambda_{2m}$ carrying other information, from the first port 221 of the optical circulator 220 (Add). Then the module multiplexes the light of the wavelengths $\lambda_{2m+1}$ out of the wavelengths $\lambda_1$-$\lambda_{2M}$ entering the first port 211 of the optical circulator 210, with the light of the wavelengths $\lambda_{2m}$ entering the first port 221 of the optical circulator 220, and outputs the multiplexed light of the wavelengths $\lambda_1$-$\lambda_{2M}$ from the third port 223 of the optical circulator 220.

Fig. 12 is a schematic diagram of the multiplexer/demultiplexer module 20 according to the second embodiment. In this multiplexer/demultiplexer module 20, an optical fiber 110A and an optical fiber 110B are optically coupled through each of optical couplers 114A and 114B, a diffraction grating 113A is formed in a predetermined range of the optical fiber 110A between the optical coupler 114A and the optical coupler 114B to constitute a diffraction grating device 100A, and a diffraction grating 113B is formed in a predetermined range of the optical fiber 110B between the optical coupler 114A and the optical coupler 114B to constitute a diffraction grating device 100B. Each of these diffraction grating devices 100A and 100B is equivalent to the foregoing diffraction grating device 100.

In this multiplexer/demultiplexer module 20, when the light of the wavelengths $\lambda_{2m+1}$ enters a first end 115A of the optical fiber 110A, the light of these wavelengths is branched by the optical coupler 114A, the branched beams travel through the respective diffraction grating devices 100A, 110B and are multiplexed by the optical coupler 114B, and the multiplexed light is outputted from a second end 116A of the optical fiber 110A. When the light of the wavelengths $\lambda_{2m}$ enters a second end 116B of the optical fiber 110B, the light of these wavelengths is branched by the optical coupler 114B, the branched beams are reflected by the respective diffraction grating devices 100A, 110B and are multiplexed by the optical coupler 114B, and the multiplexed light is outputted from the second end 116A of the optical fiber 110A. Namely, the multiplexer/demultiplexer module 20 acts as a multiplexer in this case to multiplex the light of the wavelengths $\lambda_{2m+1}$ entering the first end 115A of the optical fiber 110A, with the light of the wavelengths $\lambda_{2m}$ entering the second end 116B of the optical fiber 110B and output the multiplexed light of the wavelengths $\lambda_1$-$\lambda_{2M}$ from the second end 116A of the optical fiber 110A.

In the multiplexer/demultiplexer module 20, when the light of the wavelengths $\lambda_1$-$\lambda_{2M}$ enters the first end 115A of the optical fiber 110A, the light of these wavelengths is branched and outputted into the diffraction grating devices 100A, 110B by the optical coupler 114A. Then the light of the wavelengths $\lambda_{2m}$ out of these light beams is reflected by the diffraction grating devices 100A, 110B and multiplexed by the optical coupler 114A, and the multiplexed light is outputted from the first end 115B of the optical fiber 110B. On the other hand, the light of the wavelengths $\lambda_{2m+1}$ travels through the diffraction grating devices 100A, 110B and is multiplexed by the optical coupler 114B, and the multiplexed light is outputted from the second end 116A of the optical fiber 110A. Namely, this multiplexer/demultiplexer module 20 acts as a demultiplexer in this case to demultiplex the light of the wavelengths $\lambda_1$-$\lambda_{2M}$ entering the first end 115A of the optical fiber 110A, output the light of the wavelengths $\lambda_{2m}$ from the first end 115B of the optical fiber 110B, and output the light of the wavelengths $\lambda_{2m+1}$ from the second end 116A of the optical fiber 110A.

Furthermore, this multiplexer/demultiplexer module 20 acts both as a multiplexer and as a demultiplexer, thereby operating as an optical ADM. Namely, the multiplexer/demultiplexer module 20 operates to output the light of the wavelengths $\lambda_{2m}$ out of the wavelengths $\lambda_1$-$\lambda_{2M}$ entering the first end 115A of the optical fiber 110A, from the first end 115B of the optical fiber 110B (Drop) and input the light of the wavelengths $\lambda_{2m}$ carrying other information, from the second end 116B of the optical fiber 110B (Add). Then the module multiplexes the light of the wavelengths $\lambda_{2m+1}$ out of the wavelengths $\lambda_1$-$\lambda_{2M}$ entering the first end 115A of the optical fiber 110A, with the light of the wavelengths $\lambda_{2m}$ entering the second end 116B of the optical fiber 110B and outputs the multiplexed light of the wavelengths $\lambda_1$-$\lambda_{2M}$ from the second end 116A of the optical fiber 110A.

Fig. 13 is a schematic diagram of the multiplexer/demultiplexer module 30 according to the third embodiment. In this multiplexer/demultiplexer module 30, an optical fiber 110C and an optical fiber 110D are optically coupled through an optical coupler 114C, and a diffraction grating 113C is formed through a predetermined range of the coupled portion between the optical fiber 110C and the optical fiber 110D in the optical coupler 114C to constitute a diffraction grating device 100C. This diffraction grating device 100C is equivalent to the foregoing diffraction grating device 100. It is, however, noted that the diffraction grating 113C is formed in both the core region of the optical fiber 110C and the core region of the optical fiber 110D.

In the multiplexer/demultiplexer module 30, when the light of the wavelengths $\lambda_{2m+1}$ enters a first end 115C of the optical fiber 110C, the light of these wavelengths travels through the diffraction grating device 100C and is outputted from a second end 116C of the optical fiber 110C. When the light of the wavelengths $\lambda_{2m}$ enters a second end 116D of the optical fiber 110D, the light of these wavelengths is reflected at the diffraction grating device 100C and is outputted from the second end 116C of the optical fiber 110C. Namely, the multiplexer/demultiplexer module 30 acts as a multiplexer in this case to multiplex the light of the wavelengths $\lambda_{2m+1}$ entering the first end 115C of the optical fiber 110C, with the light of the wavelengths $\lambda_{2m}$ entering the second end 116D of the optical fiber 110D and output the multiplexed light of the wavelengths $\lambda_1$-$\lambda_{2M}$ from the second end 116C of the optical fiber 110C.

In this multiplexer/demultiplexer module 30, when the light of the wavelengths $\lambda_1$-$\lambda_{2M}$ enters the first end 115C of the optical fiber 110C, the light of these wavelengths travels up to the diffraction grating device 100C. Then the light of the wavelengths $\lambda_{2m}$ out of these lightwaves is reflected by the diffraction grating device 100C to be outputted from a first end 115D of the optical fiber 110D. On the other hand, the light of the wavelengths $\lambda_{2m+1}$ travels through the diffraction grating device 100C to be outputted from the second end 116C of the optical fiber 110C. Namely, the multiplexer/demultiplexer module 30 acts as a demultiplexer in this case to demultiplex the light of the wavelengths $\lambda_1$-$\lambda_{2M}$ entering the first end 115C of the optical fiber 110C, output the light of the wavelengths $\lambda_{2m}$ from the first end 115D of the optical fiber 110D, and output the light of the wavelengths $\lambda_{2m+1}$ from the second end 116C of the optical fiber 110C.

Furthermore, the multiplexer/demultiplexer module 30 also acts both as a multiplexer and as a demultiplexer, thereby operating as an optical ADM. Namely, the multiplexer/demultiplexer module 30 operates to output the light of the wavelengths $\lambda_{2m}$ out of the wavelengths $\lambda_1$-$\lambda_{2M}$ entering the first end 115C of the optical fiber 110C, from the first end 115D of the optical fiber 110D (Drop) and input the light of the wavelengths $\lambda_{2m}$ carrying other information, from the second end 116D of the optical fiber 110D (Add). Then the module multiplexes the light of the wavelengths $\lambda_{2m+1}$ out of the light of the wavelengths $\lambda_1$-$\lambda_{2M}$ entering the first end 115C of the optical fiber 110C, with the light of the wavelengths $\lambda_{2m}$ entering the second end 116D of the optical fiber 110D and outputs the multiplexed light of the wavelengths $\lambda_1$-$\lambda_{2M}$ from the second end 116C of the optical fiber 110C.

Since the multiplexer/demultiplexer modules 10, 20, and 30 described above all incorporate the diffraction grating device 100 of the present embodiment described previously, they are compact and inexpensive. Since the diffraction grating device 100 has the low transmittance in the reflection band and the low reflectance outside the reflection band, the multiplexer/demultiplexer modules 10, 20, and 30 all are resistant to occurrence of crosstalk, even in the case of the difference being small between the reflected wavelengths $\lambda_{2m}$ and the transmitted wavelengths $\lambda_{2m+1}$, have low reception error rates, and give rise to only small power losses in the light of the reflected wavelengths $\lambda_{2m}$.

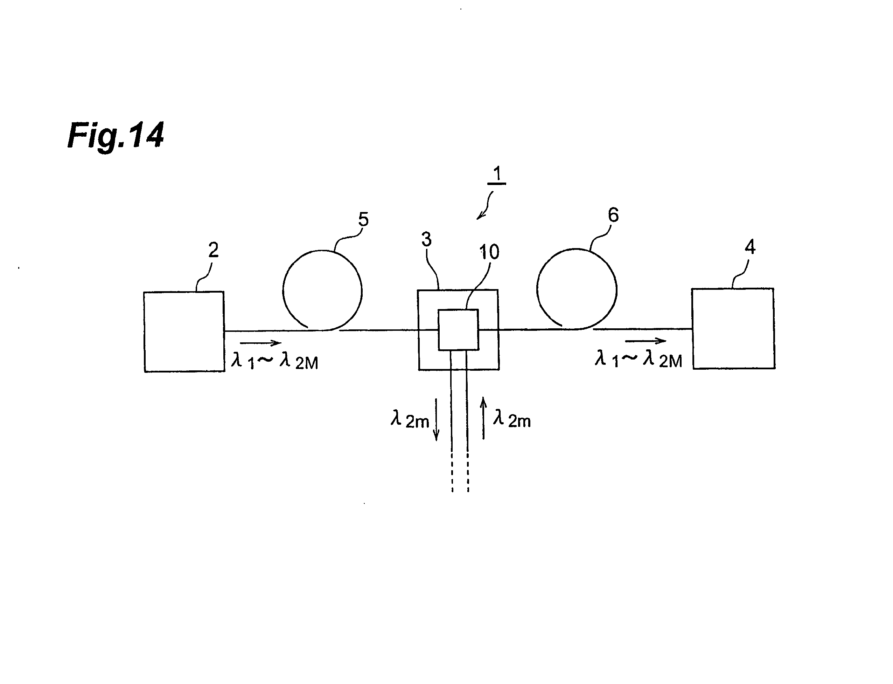

An embodiment of the optical transmission system according to the present invention will be described below. Fig. 14 is a schematic block diagram of the optical transmission system 1 according to the present embodiment. The optical transmission system 1 is constructed in a configuration wherein an optical fiber transmission line 5 is coupled between a transmitter 2 and a repeater 3, an optical fiber transmission line 6 is also coupled between the repeater 3 and a receiver 4, and the repeater 3 is provided with the multiplexer/demultiplexer module 10.

The transmitter 2 multiplexes signal light of the wavelengths $\lambda_1$-$\lambda_{2M}$ and sends the multiplexed light into the optical fiber transmission line 5. The repeater 3 receives the signal light of the wavelengths $\lambda_1$-$\lambda_{2M}$ having propagated through the optical fiber transmission line 5, demultiplexes the signal light by the multiplexer/demultiplexer module 10, sends the signal light of the wavelengths $\lambda_{2m+1}$ into the optical fiber transmission line 6, and sends the signal light of the wavelengths $\lambda_{2m}$ into another optical fiber transmission line. The repeater 3 also sends signal light of the wavelengths $\lambda_{2m}$ fed through another optical fiber transmission line, into the optical fiber transmission line 6. The receiver 4 receives the signal light of the wavelengths $\lambda_1$-$\lambda_{2M}$ having propagated through the optical fiber transmission line 6 and demultiplexes the light of the wavelengths to complete reception.

The optical transmission system 1 is configured to multiplex or demultiplex the signal light of the wavelengths $\lambda_1$-$\lambda_{2M}$, using the multiplexer/demultiplexer module 10 incorporating the diffraction grating device 100 according to the present embodiment described above. Accordingly, the system is resistant to occurrence of crosstalk, even in the case of the difference being small between the reflected wavelengths $\lambda_{2m}$ and the transmitted wavelengths $\lambda_{2m+1}$, has a low reception error rate, and gives rise to only small power losses in the light of the reflected wavelengths $\lambda_{2m}$. The multiplexer/demultiplexer module 10 may be replaced by the multiplexer/demultiplexer module 20 or 30.

The present invention is by no means intended to be limited to the above embodiments, but the invention permits a variety of modifications. For example, the diffraction grating device of the above embodiment was a device in which the diffraction grating based on the perturbation of refractive index was formed in the optical fiber as an optical waveguide. However, without having to be limited to this, the element may be one in which the diffraction grating based on the perturbation of refractive index is formed in an optical waveguide formed on a flat substrate.

**Industrial Applicability**

The diffraction grating device according to the present invention has the smaller minimum transmittance in the reflection band, the smaller maximum reflectance outside the reflection band, and the superior reflection and transmission characteristics, as compared with the conventional elements. The diffraction grating device is short in the total length and low in cost, because the diffraction grating based on the perturbation of refractive index is formed in only one range in the light guide direction in the optical waveguide.

It is obvious that the present invention can be modified in various forms from the above description of the present invention. It is to be understood that such modifications can be made in the invention without departing from the spirit and scope of the present invention, and all improvements obvious to those skilled in the art should be included in the scope of the claims which follow.

**Claims**

1. A diffraction grating device in which a diffraction grating based on perturbation of refractive index is formed through a predetermined range in a light guide direction in an optical waveguide and in which said diffraction grating selectively reflects light in a reflection band out of light guided through the optical waveguide,
   wherein said reflection band is divided into K ($K \geq 2$) wavelength bands, said perturbation of refractive index $\Delta n_{all}$ in said predetermined range is represented by the sum of index perturbations $\Delta n_k$ (k = 1-K) of periods $\Lambda_k$ according to the respective K wavelength bands, and at least one set of phases out of phases $\varphi_k$ (k = 1-K) of the index perturbations $\Delta n_k$ at a center position of the predetermined range are different from each other.

2. A diffraction grating device according to Claim 1, wherein a standard deviation of a displacement amount $\Delta z_k = \Lambda_k \cdot \Delta\varphi_k/360$ (k = 1-K), which is represented using a phase shift amount $\Delta\varphi_k$ (k = 1-K) between a reference phase $\varphi_0$ and the phase $\varphi_k$ at the center position of said predetermined range of each of the index perturbations $\Delta n_k$ (k = 1-K), is not less than 30 nm.

**3.** A diffraction grating device according to Claim 2, wherein the standard deviation of said displacement amount $\Delta z_k$ (k = 1-K) is not less than 50 nm.

**4.** A diffraction grating device according to Claim 2, wherein the standard deviation of said displacement amount $\Delta z_k$ (k = 1-K) is not less than 100 nm.

**5.** A diffraction grating device according to Claim 1, wherein a maximum amplitude of said perturbation $\Delta n_{all}$ of said diffraction grating in said predetermined range is not more than two thirds of that on the assumption that all the phases $\varphi_k$ are equal.

**6.** A diffraction grating device according to Claim 1, wherein a minimum transmittance in each of said K wavelength bands is not more than -20 dB and a maximum reflectance outside said reflection band is not more than -20 dB.

**7.** A diffraction grating device according to Claim 6, wherein the minimum transmittance in each of said K wavelength bands is not more than -30 dB.

**8.** A diffraction grating device according to Claim 6, wherein the maximum reflectance outside said reflection band is not more than -30 dB.

**9.** A method of producing a diffraction grating device as set forth in Claim 1, wherein said phases $\varphi_k$ (k = 1-K) are designed by nonlinear programming and said diffraction grating device is produced based thereon.

**10.** A multiplexer/demultiplexer module comprising a diffraction grating device as set forth in Claim 1, wherein said diffraction grating device selectively reflects light in the reflection band, thereby effecting multiplexing or demultiplexing of light.

**11.** An optical transmission system for performing optical transmission using wavelength-multiplexed signal light of multiple wavelengths, which comprises the multiplexer/demultiplexer module as set forth in Claim 10, wherein said multiplexer/demultiplexer module multiplexes or demultiplexes said signal light of the multiple wavelengths.

## Fig.1

## *Fig.2*

## *Fig.3*

## Fig.4A

REFLECTION
BAND

REFLECTION
BAND

REFLECTION
BAND

REFLECTION
BAND

REFLECTANCE (dB)

WAVELENGTH

## Fig.4B

TRANSMITTANCE (dB)

WAVELENGTH

# Fig.5

EP 1 335 219 A1

## Fig.6

## Fig.7

## Fig.8

## Fig.9

## Fig.10

**Fig.11**

10

210   212   113   100   222   220

211   213   221   223

**Fig.12**

20

115A   114A   110A   100A   113A   114B   116A

115B   110B   113B   116B

100B

**Fig.13**

30

115C   110C   100C   116C

114C   113C

115D   110D   116D

Fig.14

## INTERNATIONAL SEARCH REPORT

| International application No. |
| --- |
| PCT/JP01/08193 |

**A. CLASSIFICATION OF SUBJECT MATTER**
Int.Cl⁷ G02B6/10, G02B6/16

According to International Patent Classification (IPC) or to both national classification and IPC

**B. FIELDS SEARCHED**

Minimum documentation searched (classification system followed by classification symbols)
Int.Cl⁷ G02B6/10, G02B6/16-6/22

Documentation searched other than minimum documentation to the extent that such documents are included in the fields searched

Jitsuyo Shinan Koho        1922-1996    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)
JICST (JOIS) (grating+diffraction grating)*fiber*(phase+band)
(in Japanese)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | REID, D. C. J. et al., "Phase-Shifted Moiré Grating Fibre Resonators", In: Electronics Letters, (US), 04 January, 1990, Vol.26, No.1, pages 10 to 12<br>Full text; Figs. 1 to 3<br>Full text; Figs. 1 to 3 | 1-4<br>10,11 |
| Y | US 5717798 A (Lucent Technologies, Inc.), 10 February, 1998 (10.02.98), Full text; Figs. 1 to 10<br>& JP 10-104460 A    & EP 829741 A2 | 10,11 |
| A | Toshikazu SHIBATA et al., "Kussetsuritsu ni sinc Kansuu wo Dounyuu shita Fibre Grating no Kaiseki", Denshi Joho Tsuushin Gakkai Electronics Society Taikai Kouen Ronbunshuu 1, (Japan), 07 September, 2000 (07.09.00), C-3-24, page 149 | 1-4,6 |
| A | IBSEN, Morten et al., "Sinc-Sampled Fiber Bragg Gratings for Identical Multiple Wavelength Operation", In: IEEE Photonics Technology Letters, (US), June, 1998, Vol.10, No.6, pages 842 to 844 | 1-4,6 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>07 December, 2001 (07.12.01) | Date of mailing of the international search report<br>18 December, 2001 (18.12.01) |
| --- | --- |
| Name and mailing address of the ISA/<br>Japanese Patent Office | Authorized officer |
| Facsimile No. | Telephone No. |

Form PCT/ISA/210 (second sheet) (July 1992)

**EP 1 335 219 A1**

## INTERNATIONAL SEARCH REPORT

International application No.

PCT/JP01/08193

| C (Continuation). DOCUMENTS CONSIDERED TO BE RELEVANT | | |
|---|---|---|
| Category* | Citation of document, with indication, where appropriate, of the relevant passages | Relevant to claim No. |
| A | US 5388173 A (United Technologies Corporation), 07 February, 1995 (07.02.95), column 5, lines 15 to 29; column 6, lines 37 to 48; Figs. 3, 4, 7 & JP 9-506981 A  & WO 95/17705 A2 | 1-9 |
| | Manabu SHIOSAKI, et al., "Ta-Channel-you Fiber Grading no Kentou", Denshi Joho Tsuushin Gakkai  Sougou Taikai Kouen Ronbunshuu, (Japan), 07 March, 2001 (07.03.01), Electronics(1)C-3-16, page 181 | |
| PX | Full text; Figs. 1 to 2 | 1 |
| PY | Full text; Figs. 1 to 2 | 10,11 |
| PA | Full text; Figs. 1 to 2 | 2-9 |
| PA | BAO, Jilong et al., "Spectra of dual overwritten fiber Bragg grating", In: Optics Communications, (US), 01 February, 2001, Vol.188, pages 31 to 39 | 1-4 |

Form PCT/ISA/210 (continuation of second sheet) (July 1992)

22